# FASCICULE DE BREVET EUROPEEN

(11) **EP 3 168 070 B1**
(45) Date de publication et mention de la délivrance du brevet: **05.05.2021**
(21) Numéro de dépôt: 16197788.9
(22) Date de dépôt: 08.11.2016
(51) Int. Cl.: B60G 17/0165

(54) **DISPOSITIF DE DETECTION DE CHOCS SUR UNE ROUE D'UN VEHICULE AUTOMOBILE**
FAHRZEUGRADANSCHLAGSDETEKTOR
WHEEL IMPACT DETECTION DEVICE FOR A VEHICLE

(30) Priorité: 10.11.2015 FR 1560753
(43) Date de publication de la demande: 17.05.2017
(73) Titulaire: Renault S.A.S., 92100 Boulogne-Billancourt (FR)
(72) Inventeur: SAUDEMONT, Yoann, 28210 LES PINTHIERES (FR)

(56) Documents cités:
- US-A1- 2008 243 334
- US-A1- 2014 232 081

## Description

La présente invention concerne un dispositif de détection de chocs et, plus particulièrement, un dispositif de détection de chocs endommageant localisés au niveau des roues d'un véhicule automobile ainsi qu'un véhicule automobile équipé d'un tel dispositif.

Chaque roue d'un véhicule automobile est potentiellement sujette à des chocs plus ou moins violents lors d'un contact avec des obstacles. Traditionnellement, ces chocs sont transmis au châssis, d'une part à travers des dispositifs de suspension adaptés pour dissiper ou absorber les chocs et, d'autre part, directement à travers des pièces tels que les bras de suspension. Ils sont donc à l'origine de l'usure de la pièce à travers laquelle sont transmis les efforts liés aux chocs, de la fatigue mécanique du châssis, et de sa déformation ou de sa rupture en cas de choc endommageant.

Avantageusement, une pièce dite fusible, à déformation permanente, dont le comportement est ductile, est alors ajoutée au châssis. La pièce fusible permet d'obtenir, à partir d'un certain effort de choc, une déformation suffisante de la pièce fusible pour alerter le conducteur sans perte de contrôle, afin qu'il fasse réparer son véhicule.

Le document WO2015086962 décrit par exemple un bras de suspension dont la déformation en cas de choc endommageant est prévisible et sécuritaire. Il constitue en ce sens une pièce fusible qu'il convient de changer après avoir détecté un niveau de choc au-delà du niveau toléré par la pièce fusible.

Généralement, les chocs endommageant sont suffisamment violents pour alerter le conducteur que le châssis de son véhicule est alors déformé.

Des détecteurs de chocs sont par ailleurs déjà employés dans l'industrie, comme décrit par le document DE102004036332.

Ce document porte sur un système de protection en cas de choc frontal entre deux véhicules automobiles comprenant un dispositif actif de détection de la collision, via des capteurs de pré-collision, entraînant un actionneur braquant la roue avant située du côté de l'accident afin de limiter la pénétration des véhicules accidentés. Les capteurs employés ne sont pas des capteurs destinés à mesurer avec assez de précision le niveau du choc. De plus, ce système ne prévoit pas de moyen permettant de distinguer un choc endommageant et un choc non-endommageant au niveau de la roue.

Le document US2006273530 mentionne l'emploi de capteurs de type accéléromètres destinés à mesurer des vibrations provoquées par des chocs dus au contact des roues avec le sol, qui se ressentent dans la direction du véhicule. Le traitement des mesures délivrées par les capteurs permet d'asservir des actionneurs, lesquels génèrent des oscillations compensatrices. Ces actionneurs ne permettent toutefois pas d'avertir le conducteur.

Un choc endommageant au niveau d'une roue, latéral ou longitudinal, se transmet depuis la roue jusqu'à la pièce fusible qui est alors sollicitée, et qui se déforme sous l'effet des efforts subis.

La déformation de la pièce fusible est directement liée au niveau d'énergie du choc à la roue. Ainsi, il arrive que le choc au niveau de la roue ne déforme pas suffisamment la pièce fusible pour que le conducteur s'en aperçoive lui-même, au regard de la dégradation de sa tenue de route, ce qui peut provoquer la rupture de la pièce fusible si le véhicule poursuit sa route. Une telle situation est appelée une « zone de flou », et présente un risque de perte de contrôle du véhicule en cas de rupture, mettant ainsi en danger le conducteur, ses passagers et les autres usagers de la route Le document US 2008 0243334 décrit un dispositif de détection de chocs sur au moins l'une des roues d'un véhicule automobile, comprenant un système d'alerte pour le conducteur.

Au vu de ce qui précède, la présente invention propose un dispositif de détection de chocs sur au moins l'une des roues d'un véhicule automobile, comprenant au moins un capteur de choc destiné à être monté sur un lieu de transmission d'effort lors d'un choc longitudinal ou latéral sur une roue. Le capteur est adapté pour mesurer longitudinalement et transversalement les chocs au niveau d'au moins une roue du véhicule automobile. En outre, le dispositif comprend un calculateur embarqué de traitement des mesures délivrées par le capteur pour élaborer un signal d'alerte en fonction du niveau des chocs subis, et un avertisseur destiné à recevoir le signal d'alerte et communiquer ce signal d'alerte au conducteur.

Selon une autre caractéristique, le capteur est placé sur une pièce en contact avec une roue sur une pièce du châssis, de manière à mesurer l'accélération représentative d'un choc subi par la roue suivant un axe transversal et ou longitudinal, et est adapté pour émettre au moins un signal représentatif de l'accélération subie par la roue suivant l'axe transversal et longitudinal.

Selon une autre caractéristique, le calculateur est un calculateur destiné à être monté à bord du véhicule et est adapté pour recevoir les signaux représentatifs de l'accélération subie par chacune des quatre roues du véhicule automobile, et pour comparer ces signaux à un seuil de choc endommageant.

Selon un mode de réalisation, l'avertisseur est un voyant lumineux.

Selon une autre caractéristique, l'avertisseur est adapté pour informer un utilisateur d'un choc endommageant localisé au niveau d'au moins une roue, en identifiant la roue ayant subi le choc.

L'invention porte également sur un procédé pour détecter des chocs sur au moins l'une des roues d'un véhicule automobile. Ce procédé comporte les étapes suivantes :
- Mesurer au moyen d'au moins un capteur de choc au moins une valeur d'accélération au niveau de chacune des roues du véhicule automobile, ladite valeur étant représentative de l'intensité d'un choc appliqué sur la roue ;
- Comparer les valeurs d'accélération issues du capteur de choc avec une valeur de seuil de choc ;
- Détecter un choc endommageant ou un choc non endommageant ;
- Alerter le conducteur du véhicule en cas de choc endommageant.

Selon une autre caractéristique, on identifie la roue ayant subi le choc.

Ainsi, le conducteur est averti dès la détection du choc endommageant, évitant ainsi une zone de flou, dangereuse pour le conducteur, ses passagers et les autres usagers de la route.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une représentation de l'architecture générale d'un dispositif de détection conforme à l'invention ;
- la figure 2 est une vue de dessus d'un mode de réalisation selon lequel les capteurs sont placés sur un train avant de type MacPherson ;
- la figure 3A est une vue de dessus d'un mode de réalisation selon lequel les capteurs sont placés sur un train arrière à essieu souple ;
- la figure 3B représente une simulation numérique de chocs latéraux subis par une roue arrière gauche mesurés par des accéléromètres situés sur les bras d'un essieu souple arrière ; et
- la figure 4 illustre un véhicule automobile doté d'un dispositif de détection de chocs selon l'invention.

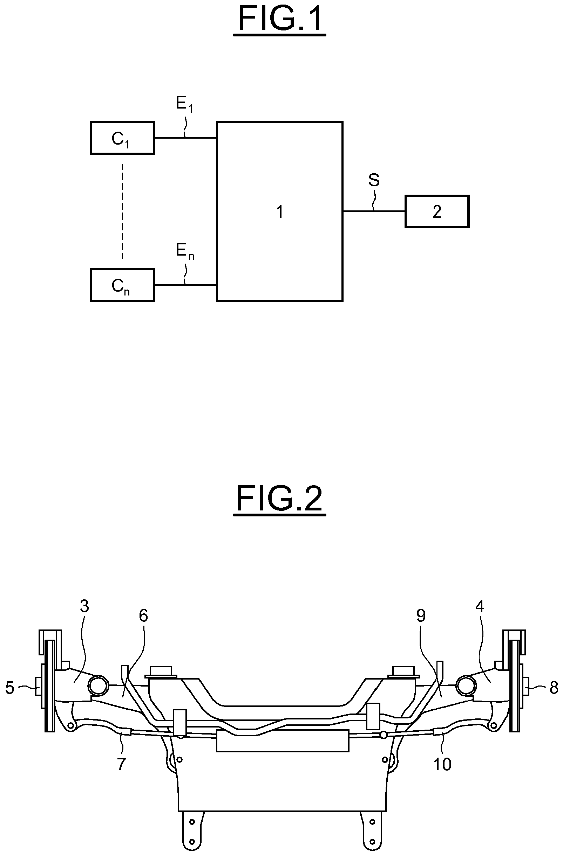

On se réfèrera tout d'abord à la figure 1 qui illustre l'architecture générale d'un dispositif de détection d'un choc endommageant appliqué à la roue pour un véhicule automobile.

Comme on le voit, le dispositif, défini par la référence numérique générale 1, comporte un réseau de capteurs c1,..., cn, émettant des signaux E1, ..., En représentatifs de l'accélération subie par la roue, suivant l'axe transversal et ou longitudinal. Ces capteurs sont reliés à une unité centrale de traitement 1, par exemple le calculateur du véhicule, pour délivrer en sortie, un signal d'alerte S représentatif de la détection d'un choc endommageant. Ce signal S est reçu par un avertisseur 2, par exemple, un voyant lumineux dédié situé sur la planche de bord de manière à être visible par le conducteur.

Les capteurs c1, ..., cn sont positionnés sur un lieu de transmission d'effort lors d'un choc longitudinal ou latéral subi par une roue du véhicule, en particulier sur une pièce en contact avec au moins cette roue. Bien entendu, on prévoira un ensemble d'au moins un capteur pour chaque roue du véhicule. Par exemple, les capteurs sont placés sur un porte-fusée ou un bras de suspension.

Selon un mode de réalisation, les capteurs c1 et c2 se trouvent respectivement sur le porte-fusée 3 du train avant gauche et le porte-fusée 4 du train avant droit du véhicule.

En effet, comme on peut le voir sur la figure 2, le porte-fusée avant gauche 3 est une pièce qui assure la liaison entre le moyeu avant gauche 5, qui est solidaire avec la roue avant gauche, et les pièces en liaison avec le châssis du véhicule comme le bras de suspension avant gauche 6 et la biellette de direction gauche 7. Le porte-fusée avant droit 4 est une pièce qui assure la liaison entre le moyeu avant droit 8, qui est solidaire de la roue avant droite, et les pièces en liaison avec le châssis du véhicule, comme le bras de suspension avant droit 9 et la biellette de direction droite 10. Les portes-fusée 3 et 4 sont adaptés au positionnement des capteurs car ils constituent un lieu de transmission des efforts lors d'un choc à la roue avant gauche ou avant droite.

Les capteurs c3 et c4 se situent respectivement sur le bras de suspension arrière gauche 11 ou le bras de suspension arrière droit 12.

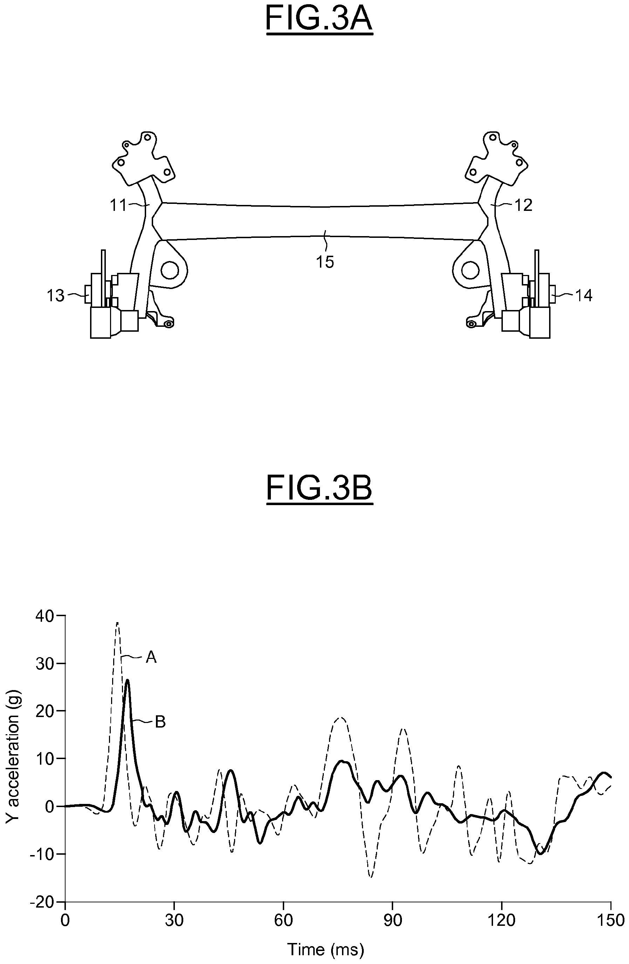

En effet, comme on peut le voir sur la figure 3A, le bras de suspension arrière gauche 11, respectivement le bras de suspension arrière droit 12, est en contact via une liaison pivot avec le moyeu 13, respectivement 14, de la roue arrière gauche, respectivement de la roue arrière droite. Dans ce mode de réalisation, dit train arrière à essieu souple, une barre flexible 15 relie les deux bras de suspension 11 et 12. Les bras de suspension 11 et 12 sont adaptés au positionnement des capteurs c3 et c4 car ils constituent un lieu de transmission des efforts lors d'un choc à l'une des roues arrières.

En référence à la figure 3B, une simulation numérique de chocs latéraux subis par une roue arrière gauche montée sur un train arrière à essieu souple, met en évidence les écarts d'accélération entre un choc endommageant (courbe A) qui provoque une déformation de la pièce fusible, et un choc non-endommageant (courbe B) pour lequel la pièce fusible du châssis ne se déforme pas. Ces écarts traduisent les différents niveaux d'énergie des chocs et permet d'identifier un seuil discriminant d'accélération entre un choc endommageant et un choc non-endommageant.

Ainsi, le calculateur 1 reçoit les signaux de mesure délivrés par les capteurs et compare ces signaux avec une valeur de seuil à partir de laquelle on considère que le choc appliqué à une roue du véhicule est un choc de type endommageant pour délivrer en sortir le signal d'alerte.

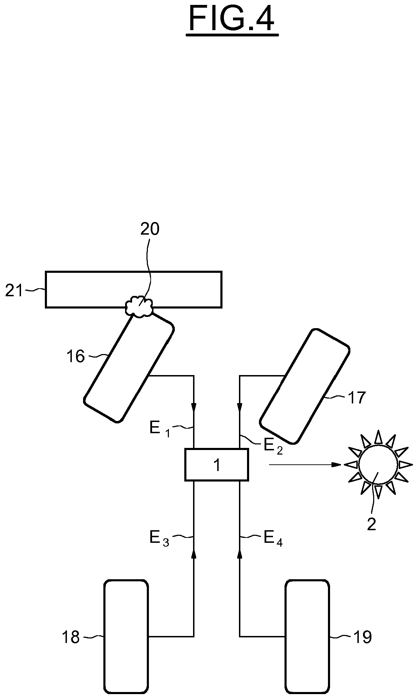

On a représenté sur la figure 4 un exemple de mise en œuvre d'un dispositif de détection de chocs selon l'invention embarqué à bord d'un véhicule automobile.

La roue avant gauche 16 du véhicule, la roue avant droite 17, la roue arrière gauche 18, et la roue arrière droite 19 comporte quatre capteurs c1, c2, c3, c4 respectifs, émettant chacun un signal représentatif des accélérations subies par les roues suivant des axes transversaux ou longitudinaux respectivement E1, E2, E3, et E4. Dans l'exemple représenté, le véhicule subit un choc 20 au niveau de sa roue avant gauche 16 en rencontrant un obstacle 21 sur sa course. Le calculateur 1 reçoit l'ensemble des signaux représentatifs de l'accélération subie par la roue suivant des axes transversaux et ou longitudinaux qu'il compare à une valeur de seuil d'accélération configurée au préalable pour établir un signal d'alerte S représentatif de la détection d'un choc endommageant. Ce signal d'alerte S est transmis à l'avertisseur 2 qui avertit le conducteur.

Le signal d'alerte S émis par le calculateur 1 peut ainsi être étalonné de manière à identifier la roue endommagée pour, par exemple, émettre un signal lumineux permettant au conducteur ou à un réparateur d'identifier la roue qui a subi un choc endommageant.

## Revendications

1. Dispositif de détection de chocs sur au moins l'une des roues d'un véhicule automobile, comprenant au moins un capteur de choc (c1) destiné à être monté sur un lieu de transmission d'effort lors d'un choc longitudinal ou latéral sur une roue et adapté pour mesurer longitudinalement et transversalement les chocs au niveau d'au moins une roue du véhicule automobile, un calculateur embarqué (1) de traitement des mesures délivrées par le capteur (c1) pour élaborer un signal d'alerte (S) en fonction du niveau des chocs subis, et un avertisseur (2) destiné à recevoir le signal d'alerte (S) et communiquer ce signal d'alerte au conducteur, **caractérisé en ce que** ledit capteur (c1) est placé sur une pièce en contact (3) avec une roue sur une pièce du châssis, de manière à mesurer l'accélération représentative d'un choc subi par la roue suivant un axe transversal et ou longitudinal et est adapté pour émettre au moins un signal représentatif de l'accélération subie par la roue suivant l'axe transversal et ou longitudinal.

2. Dispositif de détection de choc selon la revendication 1, **caractérisé en ce que** le calculateur (1) est un calculateur destiné à être monté à bord du véhicule et est adapté pour recevoir les signaux représentatifs de l'accélération subie par chacune des quatre roues du véhicule automobile, et pour comparer ces signaux à un seuil de choc endommageant.

3. Dispositif de détection de choc selon l'une quelconque des revendications 1 et 2, **caractérisé en ce que** l'avertisseur (2) est un voyant lumineux.

4. Dispositif de détection de choc selon l'une quelconque des revendications 1 et 3, **caractérisé en ce que** l'avertisseur (2) est adapté pour informer un utilisateur d'un choc (20) endommageant localisé au niveau d'au moins une roue, en identifiant la roue ayant subi le choc.

5. Procédé pour détecter des chocs sur au moins l'une des roues d'un véhicule automobile, **caractérisé en ce qu'**il comporte les étapes suivantes :
a. Mesurer au moyen d'au moins un capteur de choc (c1) au moins une valeur d'accélération au niveau de chacune des roues du véhicule automobile, ladite valeur étant représentative de l'intensité d'un choc à la roue, et ledit capteur (c1) étant placé sur une pièce en contact (3) avec une roue sur une pièce du châssis, de manière à mesurer l'accélération représentative d'un choc subi par la roue suivant un axe transversal et ou longitudinal ;
b. Comparer les valeurs d'accélération issues du capteur de choc (c1) avec une valeur de seuil de choc endommageant ;
c. Détecter un choc endommageant ou un choc non endommageant ;
d. Alerter le conducteur du véhicule en cas de choc endommageant, et dans lequel on identifie la roue ayant subi le choc.

## Patentansprüche

1. Vorrichtung zur Detektion von Stößen an wenigstens einem der Räder eines Kraftfahrzeugs, welche wenigstens einen Stoßsensor (c1), der dazu bestimmt ist, an einem Ort der Kraftübertragung bei einem longitudinalen oder seitlichen Stoß auf ein Rad angebracht zu werden, und dafür ausgelegt ist, die Stöße an wenigstens einem Rad des Kraftfahrzeugs in Längs- und Querrichtung zu messen, einen Bordcomputer (1) zur Verarbeitung der von dem Sensor (c1) gelieferten Messwerte, um in Abhängigkeit von der Stärke der aufgetretenen Stöße ein Warnsignal (S) zu erzeugen, und eine Warneinrichtung (2), die dazu bestimmt ist, das Warnsignal (S) zu empfangen und dieses Warnsignal dem Fahrer zu übermitteln, umfasst, **dadurch gekennzeichnet, dass** der Sensor (c1) an einem Teil, das sich in Kontakt (3) mit einem Rad befindet, an einem Teil des Fahrgestells angeordnet ist, um so die Beschleunigung zu messen, die für einen auf das Rad einwirkenden Stoß entlang einer Quer- und/oder Längsachse repräsentativ ist, und dafür ausgelegt ist, wenigstens ein Signal auszusenden, das für die Beschleunigung repräsentativ ist, die das Rad entlang der Quer- und/oder Längsachse erfährt.

2. Stoßdetektionsvorrichtung nach Anspruch 1, **dadurch gekennzeichnet, dass** der Computer (1) ein Computer ist, der dazu bestimmt ist, an Bord des Fahrzeugs angebracht zu werden, und dafür ausgelegt ist, die Signale zu empfangen, die für die Beschleunigung repräsentativ sind, die jedes der vier Räder des Kraftfahrzeugs erfährt, und diese Signale mit einem Schwellenwert für einen eine Beschädigung verursachenden Stoß zu vergleichen.

3. Stoßdetektionsvorrichtung nach einem der Ansprüche 1 und 2, **dadurch gekennzeichnet, dass** die Warneinrichtung (2) eine Kontrollleuchte ist.

4. Stoßdetektionsvorrichtung nach einem der Ansprüche 1 und 3, **dadurch gekennzeichnet, dass** die Warneinrichtung (2) dafür ausgelegt ist, einen Benutzer über einen eine Beschädigung verursachenden Stoß (20), der an wenigstens einem Rad aufgetreten ist, zu informieren und dabei das Rad zu identifizieren, auf das der Stoß eingewirkt hat.

5. Verfahren zum Detektieren von Stößen an wenigstens einem der Räder eines Kraftfahrzeugs, **dadurch gekennzeichnet, dass** es die folgenden Schritte umfasst:
a. Messen, mittels wenigstens eines Stoßsensors (c1), wenigstens eines Beschleunigungswertes an jedem der Räder des Kraftfahrzeugs, wobei dieser Wert für die Stärke eines Stoßes auf das Rad repräsentativ ist, und wobei der Sensor (c1) an einem Teil, das sich in Kontakt (3) mit einem Rad befindet, an einem Teil des Fahrgestells angeordnet ist, um so die Beschleunigung zu messen, die für einen auf das Rad einwirkenden Stoß entlang einer Quer- und/oder Längsachse repräsentativ ist;
b. Vergleichen der von dem Stoßsensor (c1) stammenden Beschleunigungswerte mit einem Schwellenwert für einen eine Beschädigung verursachenden Stoß;
c. Detektieren eines eine Beschädigung verursachenden Stoßes oder eines keine Beschädigung verursachenden Stoßes;
d. Warnen des Fahrers des Fahrzeugs im Fall eines eine Beschädigung verursachenden Stoßes, wobei das Rad identifiziert wird, auf das der Stoß eingewirkt hat.

## Claims

1. Device for detecting impacts on at least one of the wheels of a motor vehicle, comprising at least one impact sensor (c1) intended to be mounted on a site of force transmission during a longitudinal or lateral impact on a wheel and to longitudinally and transversely measure the impacts at at least one wheel of the motor vehicle, an on-board computer (1) for processing the measurement delivered by the sensor (c1) in order to generate an alert signal (S) according to the level of the impacts experienced, and a warning device (2) intended to receive the alert signal (S) and to communicate this alert signal to the driver, **characterized in that** said sensor (c1) is placed on a part (3) in contact with a wheel on a part of the chassis, so as to measure the acceleration representative of an impact experienced by the wheel along a transverse and/or longitudinal axis, and is designed to emit at least one signal representative of the acceleration experienced by the wheel along the transverse and/or longitudinal axis.

2. Impact detection device according to Claim 1, **characterized in that** the computer (1) is a computer intended to be mounted on-board the vehicle and is designed to receive the signals representative of the acceleration experienced by each of the four wheels of the motor vehicle, and to compare these signals with a damaging impact threshold.

3. Impact detection device according to either one of Claims 1 and 2, **characterized in that** the warning device (2) is an indicator light.

4. Impact detection device according to either one of Claims 1 and 3, **characterized in that** the warning device (2) is designed to inform a user of a damaging impact (20) located at at least one wheel while identifying the wheel having experienced the impact.

5. Method for detecting impacts on at least one of the wheels of a motor vehicle, **characterized in that** it comprises the following steps:
a. measuring, by means of at least one impact sensor (c1), at least one acceleration value at each of the wheels of the motor vehicle, said value being representative of the intensity of an impact on the wheel, and said sensor (c1) being placed on a part (3) in contact with a wheel on a part of the chassis, so as to measure the acceleration representative of an impact experienced by the wheel along a transverse and/or longitudinal axis;
b. comparing the acceleration values emanating from the impact sensor (c1) with a damaging impact threshold value;
c. detecting a damaging impact or a non-damaging impact;
d. alerting the driver of the vehicle in the event of a damaging impact, with the wheel having experienced the impact being identified in the process.
